# EUROPEAN PATENT SPECIFICATION

(11) **EP 2 117 765 B1**
(45) Date of publication and mention of the grant of the patent: **23.05.2012**
(21) Application number: 08799649.2
(22) Date of filing: 05.03.2008
(51) Int. Cl.: B23K 35/32, C04B 37/00, C04B 37/02, B23K 35/22

(54) **METAL-CERAMIC COMPOSITE AIR BRAZE WITH CERAMIC PARTICULATE**
METALL-KERAMIK-VERBUNDLOT MIT KERAMIKPARTIKELN FÜR LÖTEN AN LUFT
BRASURE COMPOSITE MÉTAL-CÉRAMIQUE SOUS AIR AVEC UNE PARTICULE CÉRAMIQUE

(30) Priority: 07.03.2007 US 715160
(43) Date of publication of application: 18.11.2009
(73) Proprietor: Battelle Memorial Institute, Richland, WA 99352 (US)
(72) Inventor: KIM, Jin, Yong, Richland, WA 99352 (US); WEIL, Kenneth, Scott, Richland, WA 99352 (US); CHOI, Jung-Pyung, Richland, WA 99352 (US)
(74) Representative: Brown, Fraser Gregory James
(86) International application number: PCT/US2008/055935
(87) International publication number: WO 2008/115696

(56) References cited:
- EP-A- 1 616 657
- EP-A- 1 629 936
- EP-A- 1 923 944
- WO-A-2006/091250
- WO-A-2007/036361
- US-A1- 2003 132 270
- WEIL ET AL: "The effect of TiO2 on the wetting behavior of silver-copper oxide braze filler metals" SCRIPTA MATERIALIA, ELSEVIER, AMSTERDAM, NL, vol. 54, no. 6, 1 March 2006 (2006-03-01), pages 1071-1075, XP005250869 ISSN: 1359-6462
- DATABASE COMPENDEX [Online] ENGINEERING INFORMATION, INC., NEW YORK, NY, US; 2005, DARSELL J T ET AL: "An investigation of wettability, and microstructure in alumina joints brazed with Ag-CuO-TiO2" XP002496020 Database accession no. E2005349309227 & CERAMIC TRANSACTIONS - SURFACES, INTERFACES, AND THE SCIENCE OF CEARMIC JOINING - PROCEEDINGS OF THE 106TH ANNUAL MEETING OF THE AMERICAN CERAMIC SOCIETY 2005 AMERICAN CERAMIC SOCIETY US, vol. 158, 18 April 2004 (2004-04-18), - 2004 pages 65-72,
- DATABASE COMPENDEX [Online] ENGINEERING INFORMATION, INC., NEW YORK, NY, US; 2006, WEIL K S ET AL: "Improved wetting characteristics in TiO2-modified Ag-CuO air braze filler metals" XP002496021 Database accession no. E20064810280302 & PROCEEDINGS OF THE 3RD INTERNATIONAL BRAZING AND SOLDERING CONFERENCE BRAZING AND SOLDERING - PROCEEDINGS OF THE 3RD INTERNATIONAL BRAZING AND SOLDERING CONFERENCE 2006 ASM INTERNATIONAL US, vol. 2006, 2004, pages 120-124,
- DATABASE INSPEC [Online] THE INSTITUTION OF ELECTRICAL ENGINEERS, STEVENAGE, GB; June 2005 (2005-06), JIN YONG KIM ET AL: "Novel metal-ceramic joining for planar SOFCs" XP002496022 Database accession no. 8755949 & Journal of the Electrochemical Society Electrochem. Soc USA, vol. 152, no. 6, June 2005 (2005-06), pages J52-J58, ISSN: 0013-4651
- DARSELL ET AL: "The effect of palladium additions on the solidus/liquidus temperatures and wetting properties of Ag-CuO based air brazes" JOURNAL OF ALLOYS AND COMPOUNDS, ELSEVIER SEQUOIA, LAUSANNE, CH, vol. 433, no. 1-2, 16 March 2007 (2007-03-16), pages 184-192, XP005938715 ISSN: 0925-8388
- DATABASE COMPENDEX [Online] ENGINEERING INFORMATION, INC., NEW YORK, NY, US; 2005, "Surfaces, Interfaces, and the Science of Ceramic Joining - Proceedings of the 106th Annual Meeting of the American Ceramic Society" XP002496071 Database accession no. E2005349309237 & CERAMIC TRANSACTIONS - SURFACES, INTERFACES, AND THE SCIENCE OF CEARMIC JOINING - PROCEEDINGS OF THE 106TH ANNUAL MEETING OF THE AMERICAN CERAMIC SOCIETY 2005 AMERICAN CERAMIC SOCIETY US, vol. 158, 18 April 2004 (2004-04-18),

## Description

### GOVERNMENT RIGHTS STATEMENT

The invention was made with Government support under Contract DE-AC0676RLO 1830, awarded by the U.S. Department of Energy. The Government has certain rights in the invention.

### TECHNICAL FIELD

This invention relates to electrochemical devices, including, without limitation, solid oxide fuel cells, oxygen separators, and hydrogen separators. More specifically, the present invention relates to an improved braze used for forming joints utilized in electrochemical devices.

### BACKGROUND OF THE INVENTION

The publications J.S. Hardy, J.Y. Kim, K.S. Weil, "Joining Mixed Conducting Oxides Using An Air-Fired Electrically Conductive Braze," J. Electrochem. Soc. Vol. 151, No. 8, pp. j43-j49 and US Patent Publication No. 2003/132270, recently described a method of ceramic-to-metal brazing useful for fabricating high temperature solid-state devices such as oxygen generators. Referred to as "air brazing," the technique differs from traditional active metal brazing in two important ways: (1) it utilizes a liquid-phase oxide-noble metal melt as the basis for joining and therefore exhibits high-temperature oxidation resistance and (2) the process is conducted directly in air without the use of fluxes and/or inert cover gases. In fact, the strength of the bond formed during air brazing relies on the formation of a thin, adherent oxide scale on the metal substrate. The technique employs a molten oxide that is at least partially soluble in a noble metal solvent to pre-wet the oxide faying surfaces, forming a new surface that the remaining molten braze material easily wets. As user herein the term "braze" means a metal, or a metal containing mixture, used to form a hermetic joint between two parts, which parts may be metal, ceramic, or combinations thereof. "Braze" is often referred to as "filler material" or "filler metal" in the scientific and engineering literature. A number of metal oxide-noble metal systems are suitable, including Ag-CuO, Ag-V₂O₅, and Pt-Nb₂O₅ as described in Z.B. Shao, K.R. Liu, L.Q. Liu, H.K. Liu, S. Dou (1993) "Equilibrium Phase Diagrams In The Systems PbO-Ag and CuO-Ag," J. Am. Cer. Soc., 76 (10) 2663-4; in A.M. Meier, P.R. Chidambaram, G.R. Edwards (1995), "A Comparison Of The Wettability Of Copper-Copper Oxide And Silver-Copper Oxide On Polycrystalline Alumina," J. Mater. Sci., 30 (19) 4781-6; and in R.S. Roth, J.R. Dennis, H.F. McMurdie, eds. (1987) Phase Diagrams for Ceramists, Volume VI, The American Ceramic Society, Westerville, OH.

Ag-CuO air brazing thus does not require the use of an inert environment or a flux. Since silver is used as a matrix phase, brazing can be conducted directly in air and the resulting joint has good oxidation resistance at high temperature. The addition of copper oxide, which dissolves in a molten silver, improves the wettability of molten silver on both ceramic and metal faying surfaces, resulting in good bonding between silver and substrate surfaces.

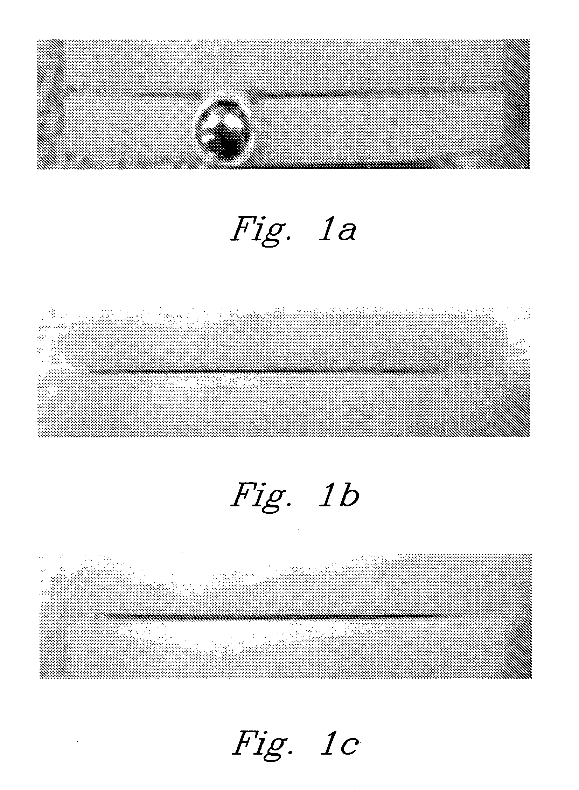

Despite these advantages, the low viscosity of molten Ag-CuO causes the braze to squeeze-out (beading). To maintain good contact between the braze and the faying surfaces, a weight is typically used to squeeze them together. However, the molten braze is often squeezed out during processing, causing beads of braze to form outside of joined surfaces as shown in Figure 1(a). This squeeze-out phenomenon requires an additional post treatment to remove these beads, which can damage the joined parts.

The low viscosity of a molten air braze also causes formation of air pockets, especially when the wettability of the braze on a substrate is poor. Also, when CuO is dissolved us a molten liquid, it precipitates or reacts with the ceramic substrates to form brittle phases at the substrate/braze interface. While the wettability of the molten liquid improves with an increase in CuO content, due to the formation of these brittle interfacial phases, increases in flexural strength with additional CuO content is limited, The formation of continuous brittle interfacial phases is often observed in the braze with high CuO content, and is a crucial factor which limits flexural strength of joints since these brittle interfacial phases provide an easy path for crack propagation.

While advances in sealing techniques such as the brazing technique described above have improved the performance of ceramic to metal and/or ceramic to ceramic joints in high temperature environments typical of electrochemical devices such as solid oxide fuel cells, there still exists a need for further improvements in these joint that allow them to operate over multiple cycles while maintaining a hermetic scal between the metal and ceramic parts and while minimizing the formation of air pockets and continuous brittle interfacial phases. The present invention addresses that need.

Weil et al "The effect of TiO2 on the wetting behavior of silver-copper oxide braze filler metals", Scripta Materialia, Vol. 54, no. 6, 1 March 2006, pp 1071-1075, discloses Ag-CuO compositions containing small amounts of TiO₂. When used to braze onto alumina a secondary oxide phase containing Al₂O₃ and CuO in the solid solutions was observed in the interfacial copper oxide.

### SUMMARY OF THE INVENTION

The present invention provides brazes and methods for joining by brazing as set forth in the claims hereinafter.

Accordingly, present invention is a method for joining two ceramic parts, and/or a metal part to a ceramic part, and/or two metal parts, and the braze mixture used in that method. Briefly, the present invention joins together two or more parts by providing a braze consisting of a mixture of copper oxide, silver, and ceramic particulate. As used herein, the ceramic particulate thus becomes a part of the braze. The braze is placed upon the surfaces of the ceramic and/or metal parts, which are then held together for sufficient time and at a sufficient temperature to cause the braze to form a bond between the ceramic and/or metal parts. Preferably, although not meant to be limiting, a force is applied to the ceramic and/or metal parts to hold them in tight proximity with one another.

In addition to the mixture of copper oxide, silver, and ceramic particulate, the braze may further incorporate titanium oxide. Titanium oxide acts as a wetting modifier, assisting in the formation of a uniform, well spread layer of the braze between the ceramic and/or metal parts. The titanium oxide when present comprises between about 0.1 mol% and 5 mol% of the silver in the mixture.

The braze may also further incorporate Pt, Pd and combinations thereof, as additives to modify the melting temperature of the braze. The Pt, Pd and combinations thereof when present comprise between about 0.1 mol% and about 25 mol% of the silver in the mixture.

As used herein, the term "ceramic" means metal oxides, metal nitrides and metal carbides. The ceramics for use in the present invention are perovskites, alumina, YSZ, NiO, CeO2, silicon carbide, silica, magnesia and combinations thereof.

The copper oxide is between about 1 mol% and about 70 mol% of the silver. Also the ceramic particulate is between about 1% and about 50 % of the total volume of the mixture of copper oxide, silver, and ceramic particulate. While the present invention should be understood to encompass ceramic particulate of any size, ceramic particulate smaller than about 200 µm are generally preferred. These ceramic particulates may be in the form of short fibers, long fibers, powders, flakes, and combinations thereof.

### BRIEF DESCRIPTION OF THE DRAWINGS

The following detailed description of the embodiments of the invention will be more readily understood when taken in conjunction with the following drawing, wherein:

Figure 1 is a series of comparative photos showing the effects of adding ceramic particles to a silver braze on the formation of a squeeze-out (beading). Figure 1(a) is a sample containing only silver (Ag) braze. Figure 1(b) is a sample containing Ag braze plus 5 vol% alumina ceramic particulate, and Figure I (c) is a sample containing Ag braze plus 10 vol% alumina ceramic particulate.

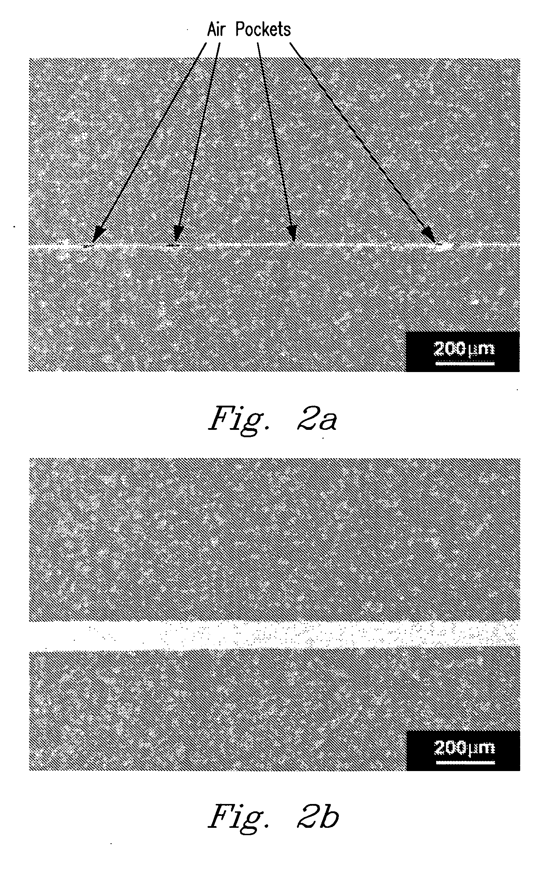

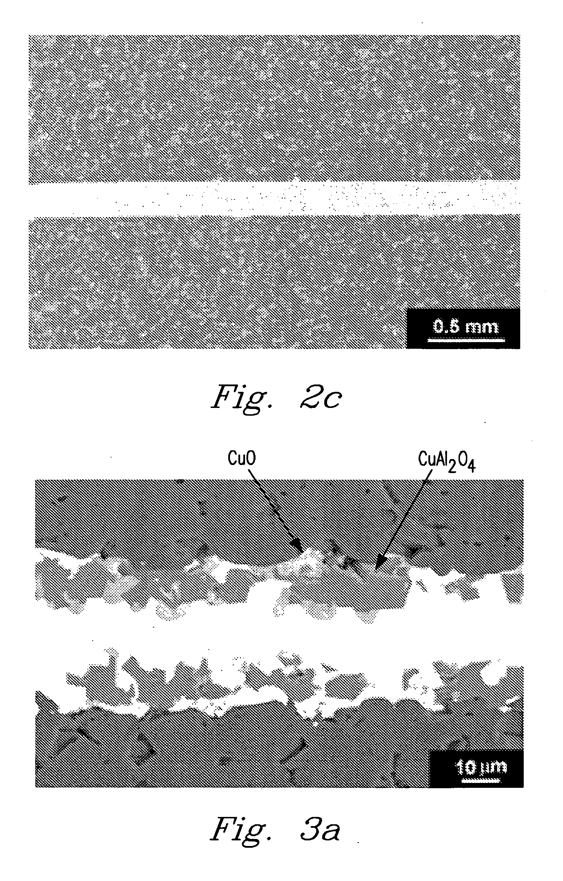

Figure 2 is a series of SEM micrographs showing cross sections of a set of samples with 2mol% CuO and 98mol% Ag containing various amounts of ceramic particulate. Figure 2(a) is the sample containing 0% ceramic particulate. Figure 2(b) is the sample containing 5 vol% alumina ceramic particulate, and Figure 2(c) is a sample containing 10 vol% alumina ceramic particulate.

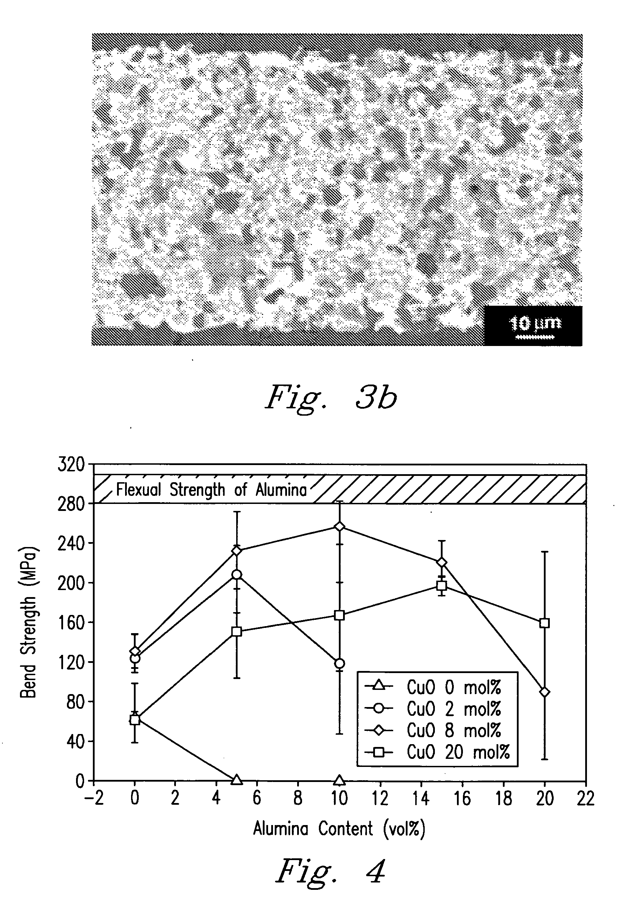

Figure 3 is a series of SEM micrographs showing that the formation of continuous brittle interfacial phases are minimized by the addition of a ceramic particulate. Figure 3(a) shows a 8 mol% CuO braze and Figure 3(b) shows the same 8 mol% CuO braze with an additional 10 vol% of alumina ceramic particulate.

Figure 4 is a graph showing the increase in strength by the addition of alumina ceramic particulate using a variety of CuO-Ag brazes. As shown in the graph, a flexural strength of up to 260 MPa is achieved, which is comparable to that of alumina substrates (280 ∼310 MPa).

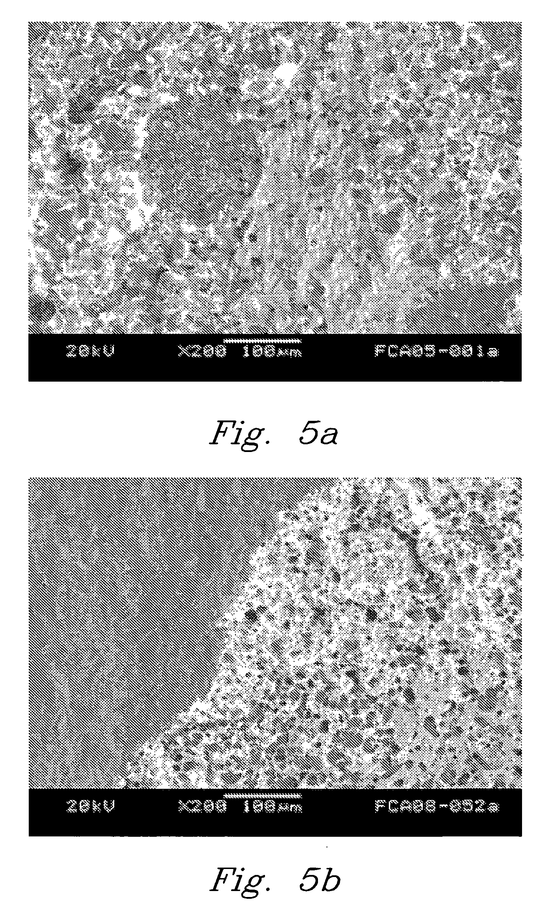

Figure 5 is a series of SEM micrographs showing the fracture surfaces of bend test specimen: Figure 5(a) shows a Ag-8 mol% CuO specimen, showing a fracture through a brittle interfacial phase. Figure 5 (b) shows a Ag-8 mol% CuO specimen with 5 vol% alumina added, showing a fracture through the alumina substrate (not through the interface).

### DETAILED DESCRIPTION OF THE PREFERRED EMBODIMENTS

For the purposes of promoting an understanding of the principles of the invention, reference will now be made to the embodiments illustrated in the drawings and specific language will be used to describe the same. It will nevertheless be understood that no limitations of the inventive scope is thereby intended, as the scope of this invention should be evaluated with reference to the claims appended hereto. Alterations and further modifications in the illustrated devices, and such further applications of the principles of the invention as illustrated herein are contemplated as would normally occur to one skilled in the art to which the invention relates.

A series of experiments were undertaken to demonstrate a preferred embodiment of the present invention. Using the copper oxide (CuO)-silver (Ag) phase diagram, four basic binary braze compositions (referred to as "CA" braze) were selected with the CuO concentration ranging from 0 to 20 mol%. The respective combinations are shown in Table 1. To identify joining characteristics of metal-ceramic composite braze, alumina powder (Al₂O₃) of between 0 vol% and 20 vol% was added to four basic binary braze compositions.

**Table 1**

| Sample ID | Ag (mol%) | CuO (mol%) | Al₂O₃ (mol%) | Al₂O₃ (vol%) |
|---|---|---|---|---|
| CA00 (Comparative) | 100 | 0 | 0 | 0 |
| CA00-5V | 97.94 | 0 | 2.06 | 5 |
| CA00-10V (Comparative) | 95.75 | 0 | 4.25 | 10 |
| CA02 (Comparative) | 98 | 2 | 0 | 0 |
| CA02-5V | 95.97 | 1.96 | 2.07 | 5 |
| CA02-10V | 93.82 | 1.91 | 4.27 | 10 |
| CA08 (Comparative) | 92 | 8 | 0 | 0 |
| CA08-5V | 90.08 | 7.83 | 2.09 | 5 |
| CA08-10V | 88.03 | 7.65 | 4.32 | 10 |
| CA08-15V | 85.85 | 7.46 | 6.69 | 15 |
| CA08-20V | 83.52 | 7.26 | 9,22 | 20 |
| CA20 (Comparative) | 80 | 20 | 0 | 0 |
| CA08-5V | 78.28 | 19.57 | 2.15 | 5 |
| CA20-10V | 76.46 | 19.12 | 4.42 | 10 |
| CA20-15V | 74.52 | 18.63 | 6.85 | 15 |
| CA20-20V | 72.46 | 18.12 | 9.42 | 20 |

Each of these braze compositions were formulated by ball-milling appropriate amounts of copper powder (99%, 8∼11 µm, Alfa Acsar), silver powder (99.9%, 0.5∼1.0 µm, Alfa Aesar) and alumina power (99.9%, 0.35∼0.49 µm, Alfa Aesar). Results from X-ray diffraction indicate that the copper powder fully oxidized *in-situ* during a typical air brazing heating schedule to form CuO. The braze pastes used in these joining experiments were prepared by mixing the mixture of CuO, silver and alumina with a 15 wt% polymer binder (V006, Heraeus Inc.)

The ceramic parts joined with the braze were prepared from polycrystalline alumina plates (Al₂O₃, Alfa Aesar) measuring 100mm x 25mm x 4mm. Two alumina plates were joined along the long edge using one of the braze pastes to form a 100 mm x 50 mm x 4 mm plate from which specimens were cut. To maintain the uniform initial thickness of the braze layer, the paste was applied on each faying surface of the alumina plates using a stencil-printing technique and then dried at 80°C for 30 min. After drying, the thickness of a braze layer between two alumina plates was ∼200 µm. Spring steel side clips and an appropriately positioned refractory brick (at weight of 200 g, providing a pressure of ∼ 5kPa on the faying surfaces) were used to hold the specimens together during brazing and to keep them from slipping during the heating cycle. Brazing was conducted by heating in static air at 3°C/min to 1000°C, holding at 1000°C for 1 h, and cooling to room temperature at 3°C/min.

Once joined, each sample was cut into rectangular bend bars, each measuring 4 mm x 3 mm x 50 mm with the joints located midway along their lengths. The edges to be placed under tension during bending were chamfered to remove machining flaws that could cause premature failure. Four-point bending tests following the ASTM standard test method (C1161-02c) were then conducted to measure the flexual strength of each joint. Microstructural analysis was conducted on polished cross-sectioned surfaces of the bending bars using a JEOL JSM-5900LV scanning electron microscope (SEM) equipped with an Oxford energy dispersive X-ray analysis (EDX) system. SEM analysis was also conducted on the fracture surfaces of the broken bend bars.

The addition of ceramic powders as described herein increased the viscosity of the molten braze, and improved the resistance against compression. Figure 1(a) (b) and (c), show the effects of ceramic particulate addition on the formation of a squeeze-out (beading). Figure 1(a) is a sample containing only silver (Ag) braze. Figure 1(b) is a sample containing Ag braze plus 5 vol% alumina ceramic particulate, and Figure 1(c) is a sample containing Ag braze plus 10 vol% alumina ceramic particulate. Figure 1 thus shows that squeeze-out is successfully eliminated by incorporating ceramic powders into a silver braze.

Increased viscosity also improves the resistance to the formation of air pockets, since the molten braze with high viscosity cannot freely move around even when the wettability between a substrate and a molten braze is not good. Figure 2 shows cross sections of the samples shown in Figure 1. Figure 2(a) is the sample containing 2mol% CuO and 98mol% silver (Ag) braze with 0 vol% alumina ceramic particulate. Figure 2(b) is the sample containing 2mol% CuO and 98mol% silver (Ag) braze plus 5 vol% alumina ceramic particulate, and Figure 2(c) is a sample containing 2mol% CuO and 98mol% silver (Ag) braze plus 10 vol% alumina ceramic particulate. Figure 2 thus shows that that formation of air pockets is suppressed by addition of ceramic particles into a braze.

Dispersion of ceramic particles also provides nucleation sites for brittle phases so that brittle phases form as discrete particles throughout the entire braze matrix rather than as a continuous layer at the substrate/braze interface. Figure 3 shows that the formation of continuous brittle interfacial phases are minimized for a braze with 8 mol% CuO (shown in Figure 3(a)) by adding 10 vol% of alumina ceramic particulate (shown in Figure 3(b)).

The removal of air pockets and minimization of brittle interfacial phases increases the flexural strength of the alumina joint brazed with a variety of different Ag-CuO brazes. As shown in Figure 4, four separate Ag-CuO braze combinations were tested, ranging from 100mol% silver to 80mol% silver, 20mol% CuO. These braze combinations were then given 0, 5, 10 15 and 20 vol% alumina ceramic particulate, and tested for strength using a standard four point bend test. As shown by the results presented in Figure 4, for the CuO 8 mol%, Ag 92 mol% with 10vol% ceramic particulate, the strength is more than doubled by adding alumina ceramic particulate. The maximum flexural strength of 260 MPa is achieved, which is comparable to that of alumina substrates (280 ∼310 MPa).

The fracture surfaces of bend test specimens are shown in Figure 5. The sample joined without alumina particles (Ag-8 mol% CuO, Figure 5a) shows a fracture through the brittle interfacial phases. The fracture surface of the 5 vol% alumina-added braze (Figure 5b) shows a fracture through the alumina substrate or by ductile fracture of the silver braze matrix, indicating the substrate/braze interface is even stronger than the ceramic substrate itself.

While the invention has been illustrated and described in detail in the drawings and foregoing description, the same is to be considered as illustrative and not restrictive in character. Only certain embodiments have been shown and described, and all changes, equivalents, and modifications that come within the scope of the invention as defined in the claims are desired to be protected. Any experiments, experimental examples, or experimental results provided herein are intended to be illustrative of the present invention and should not be considered limiting or restrictive with regard to the invention scope. Further, any theory, mechanism of operation, proof, or finding stated herein is meant to further enhance understanding of the present invention and is not intended to limit the present invention in any way to such theory, mechanism of operation, proof, or finding.

Thus, the specifies of this description and the attached drawings should not be interpreted to limit the scope of this invention to the specifics thereof. Rather, the scope of this invention should be evaluated with reference to the claims appended hereto. In reading the claims it is intended that when words such as "a", "an", "at least one", and "at least a portion" are used there is no intention to limit the claims to only one item unless specifically stated to the contrary in the claims. Further, when the language "at least a portion" and/or "a portion" is used, the claims may include a portion and/or the entire items unless specifically stated to the contrary. Likewise, where the term "input" or "output" is used in connection with an electric device or fluid processing unit, it should be understood to comprehend singular or plural and one or more signal channels or fluid lines as appropriate in the context.

## Claims

1. A braze for joining two parts comprising silver and copper oxide in an amount of 1 to 70 mol% with respect to the silver, and ceramic particulate selected from perovskite, alumina, YSZ, NiO, CeO₂, silicon carbide, silica, magnesia, and combinations thereof, in an amount of 1 to 50% of the total volume of the mixture of copper oxide, silver and ceramic particulate, and
optionally titanium oxide in an amount of 0.1 to 5 mol% with respect to silver,
optionally platinum or palladium, or combinations thereof, in an amount of 0.1 to 25 mol% with respect to silver.

2. The braze of claim 1 wherein the ceramic particulate is smaller than 200 micrometers.

3. The braze of claim 1 or claim 2 wherein the ceramic particulate is fibers, powders, flakes and combinations thereof.

4. A method for joining two parts comprising the steps of:
a. providing two or more parts,
b. providing a braze according to any one of the preceding claims between said two or more parts.
c. heating said braze for a time and at a temperature sufficient to form the braze into a bond holding the two or more parts together.

5. A method as claimed in claim 4 which is a method for joining two ceramic parts, and/or a metal part to a ceramic part, and/or two metal parts.

6. A method as claimed in claim 5 wherein the braze is placed upon surfaces of the ceramic and/or metal parts, which parts are then held together for sufficient time and at a sufficient temperature to cause the braze to form a bond between the ceramic and/or metal parts, and wherein optionally a force is applied to the ceramic and/or metal parts to hold them in tight proximity during brazing.

7. An electrochemical device including a brazed joint obtainable by the method of any of claims 4 to 6.

## Patentansprüche

1. Lot zum Verbinden zweier Teile, umfassend Silber und Kupferoxid in einer Menge von 1 bis 70 Mol-% in Bezug auf Silber, und Keramikpartikel, die ausgewählt werden aus Perowskit, Aluminiumoxid, YSZ, NiO, CeO₂, Siliciumcarbid, Siliciumoxid, Magnesiumoxid und Kombinationen davon, in einer Menge von 1 bis 50% des Gesamtvolumens der Mischung aus Kupferoxid, Silber und Keramikpartikeln, und
optional Titanoxid in einer Menge von 0,1 bis 5 Mol-% in Bezug auf Silber,
optional Platin oder Palladium oder Kombinationen davon, in einer Menge von 0,1 bis 25 Mol-% in Bezug auf Silber.

2. Lot nach Anspruch 1, wobei die Keramikpartikel kleiner sind als 200 Mikrometer.

3. Lot nach Anspruch 1 oder Anspruch 2, wobei die Keramikpartikel Fasern, Pulver, Flocken oder Kombinationen davon sind.

4. Verfahren zum Verbinden zweier Teile, umfassend folgende Schritte:
a. Bereitstellen von zwei oder mehreren Teilen,
b. Bereitstellen eines Lotes nach einem der vorhergehenden Ansprüche zwischen den zwei oder mehreren Teilen,
c. Erhitzen des Lotes für eine Zeitdauer und bei einer Temperatur, die ausreichend sind, um das Lot in eine Verbindung umzuformen, die die zwei oder mehreren Teile zusammenhält.

5. Verfahren nach Anspruch 4, das ein Verfahren zum Verbinden zweier Keramikteile und/oder eines Metallteils mit einem Keramikteil und/oder zweier Metallteile ist.

6. Verfahren nach Anspruch 5, wobei das Lot auf Oberflächen der Keramik-und/oder Metallteile angeordnet wird, wobei die Teile anschließend für eine ausreichende Zeitdauer und bei einer ausreichenden Temperatur zusammengehalten werden, um zu bewirken, dass das Lot eine Verbindung zwischen den Keramik- und/oder Metallteilen bildet, und wobei optional eine Kraft auf die Keramik- und/oder Metallteile angewendet wird, um sie beim Löten eng aneinander zu halten.

7. Elektrochemische Vorrichtung, umfassend eine Lötverbindung, die durch das Verfahren nach einem der Ansprüche 4 bis 6 erhalten werden kann.

## Revendications

1. Brasure pour joindre deux parties comprenant de l'argent et de l'oxyde de cuivre en une quantité de 1 à 70% mol par rapport à l'argent, et des particules céramiques sélectionnées parmi la pérovskite, alumine, YSZ, NiO, CeO₂, carbure de silicium, silice, magnésie et leurs combinaisons, en une quantité de 1 à 50% du volume total du mélange d'oxyde de cuivre, d'argent et de particules céramiques, et
en option de l'oxyde de titane en une quantité de 0,1 à 5% en mol par rapport à l'argent,
en option du platine ou du palladium ou leurs combinaisons, en une quantité de 0,1 à 25% en mol par rapport à l'argent.

2. Brasure selon la revendication 1, où les particules céramiques sont plus petites que 200 micromètres.

3. Brasure selon la revendication 1 ou la revendication 2, où les particules céramiques sont des fibres, poudres, flocons et leurs combinaisons.

4. Procédé pour joindre deux parties comprenant les étapes de:
a. réaliser deux ou plusieurs parties,
b. réaliser une brasure selon l'une quelconque des revendications précédentes entre les deux ou plusieurs parties,
c. chauffer ladite brasure pendant une durée et à une température suffisante pour former la brasure en une liaison retenant les deux ou plusieurs parties ensemble.

5. Procédé selon la revendication 4, qui est un procédé pour joindre deux parties céramiques et/ou une partie métallique à une partie céramique et/ou deux parties métalliques.

6. Procédé selon la revendication 5, dans lequel la brasure est placée sur des surfaces de parties céramiques et/ou métalliques, lesdites parties étant ensuite maintenues ensemble pendant une durée suffisante et à une température suffisante pour amener la brasure à former une liaison entre les parties céramiques et/ou métalliques, et où en option une force est appliquée aux parties céramiques et/ou métalliques pour les maintenir ensemble en une proximité étroite durant le brasage.

7. Dispositif électrochimique incluant un joint de brasure obtenu par le procédé selon l'une quelconque des revendications 4 à 6.
